# EUROPEAN PATENT APPLICATION

(11) **EP 4 823 156 A1**
(43) Date of publication of application: **14.10.2026**
(21) Application number: 24899606.8
(22) Date of filing: 19.11.2024
(51) Int. Cl.: H04W 24/08

(54) **INFORMATION TRANSMISSION METHOD AND APPARATUS, AND STORAGE MEDIUM**

(30) Priority: 08.12.2023 CN 202311686791
(71) Applicant: Huawei Technologies Co., Ltd., Shenzhen, Guangdong 518129 (CN)
(72) Inventor: XU, Bin, Shenzhen, Guangdong 518129 (CN); HAO, Jinping, Shenzhen, Guangdong 518129 (CN)
(74) Representative: Huawei European IPR
(86) International application number: PCT/CN2024/132936
(87) International publication number: WO 2025/118964

(57) **Abstract**

Embodiments of this application disclose an information transmission method, an apparatus, and a storage medium, relating to the field of communication technologies, enabling an access network device to perform positioning measurement corresponding to a terminal device in time. The method includes: receiving a first request message from a location management function network element, where the first request message is used to request positioning signal configuration information of a terminal device, the first request message carries first information, the first information is used to identify the positioning measurement corresponding to the terminal device, and the positioning measurement corresponding to the terminal device is a positioning measurement performed by the access network device on the positioning signal sent by the terminal device.

## Description

This application claims priority to Chinese Patent Application No. 202311686791.3, filed with the China National Intellectual Property Administration on December 8, 2023 and entitled "INFORMATION TRANSMISSION METHOD, APPARATUS, AND STORAGE MEDIUM", which is incorporated herein by reference in its entirety.

### TECHNICAL FIELD

Embodiments of this application relate to the field of communication technologies, and in particular, to an information transmission method, an apparatus, and a storage medium.

### BACKGROUND

Currently, an access network device may perform positioning measurement on a positioning signal sent by a terminal device based on a request message. If the positioning signal sent by the terminal device changes, the access network device needs to obtain a measurement update message from a location management function (location management function, LMF), so as to continue to perform, based on the measurement update message, positioning measurement on the positioning signal sent by the terminal device. This may result in a delay in positioning measurement performed by the access network device on the positioning signal sent by the terminal device.

### SUMMARY

Embodiments of this application provide an information transmission method, an apparatus, and a storage medium, so that an access network device can perform positioning measurement corresponding to a terminal device in time.

According to a first aspect, an information transmission method is provided. The method may be performed by an access network device, or may be performed by a component of an access network device, for example, a processor, a chip, or a chip system of the access network device, or may be implemented by a logical module or software that can implement all or some of access network devices. The following provides descriptions by using an example in which the method is performed by the access network device. The information transmission method includes: receiving a first request message from a location management function network element, where the first request message is used to request positioning signal configuration information of a terminal device, the first request message carries first information, the first information is used to identify a positioning measurement corresponding to the terminal device, and the positioning measurement corresponding to the terminal device is a positioning measurement performed by the access network device on the positioning signal sent by the terminal device.

In this embodiment of this application, the access network device may learn, via the first information carried in the first request message, of the positioning measurement corresponding to the terminal device. Because there is a correspondence between the terminal device and the positioning measurement, the access network device may directly perform the positioning measurement on the positioning signal sent by the terminal device. If the positioning signal of the terminal device changes subsequently, the access network device may further directly continue to perform, based on a correspondence between the terminal device and the positioning measurement, the positioning measurement on the signal sent by the terminal device, thereby avoiding an operation of transmitting a measurement update message between the access network device and the location management function network element, so that the access network device can perform the positioning measurement corresponding to the terminal device in time, and further avoid delaying the access network device to perform the positioning measurement corresponding to the terminal device.

With reference to the first aspect, in a possible implementation, the method provided in this embodiment of this application further includes: performing, when the positioning signal sent by the terminal device changes, the positioning measurement corresponding to the terminal device on the changed positioning signal sent by the terminal device.

In other words, when the positioning signal sent by the terminal device changes, the access network device may directly perform the positioning measurement corresponding to the terminal device on the changed positioning signal sent by the terminal device, instead of performing the positioning measurement corresponding to the terminal device on the positioning signal sent by the terminal device before the change. In this way, not only an operation of transmitting a measurement update message between the access network device and the location management function network element is avoided, but also impact of an invalid positioning signal on a positioning measurement result is avoided, thereby ensuring accuracy of the positioning measurement result obtained by the access network device through measurement.

With reference to the first aspect, in a possible implementation, the first information includes an identifier of the positioning measurement corresponding to the terminal device.

Because the request message is used to request the configuration information of the positioning signal sent by the terminal device, the request message is a message related to the terminal device. The first information may be carried in the request message. In other words, the first information is also information related to the terminal device. Therefore, in this case, the first information includes the identifier of the positioning measurement corresponding to the terminal device, so that the access network device can learn, after receiving the request message, that the positioning measurement is the positioning measurement corresponding to the terminal device.

With reference to the first aspect, in a possible implementation, the positioning signal is a sounding reference signal SRS.

In other words, the information transmission method described in this embodiment of this application may be further applied to an SRS measurement scenario.

With reference to the first aspect, in a possible implementation, the first request message is a positioning information request message.

Because the positioning information request message is a message exchanged in an SRS measurement procedure, when the first request message is the positioning information request message, it may indicate that the information transmission method described in this embodiment of this application may be further applied to an SRS measurement scenario.

With reference to the first aspect, in a possible implementation, the method provided in this embodiment of this application further includes: receiving a second request message from the location management function network element, where the second request message is used to request the access network device to perform the positioning measurement corresponding to the terminal device, and the second request message carries the first information.

In this implementation, the second request message also carries the first information. In this way, the access network device may associate the first request message with the second request message via the first information. If one request message changes, the access network device may determine another request message based on an association relationship between the first request message and the second request message, and adaptively modify the another request message, so that changes of the first request message and the second request message can be synchronized, thereby avoiding confusion in a process in which the access network device performs positioning measurement.

With reference to the first aspect, in a possible implementation, the second request message is a measurement request message.

Because the measurement request message is a message exchanged in an SRS measurement procedure, when the second request message is a measurement request message, it may indicate that the information transmission method described in this embodiment of this application may be further applied to an SRS measurement scenario.

According to a second aspect, an information transmission method is provided. The method may be performed by a location management function network element, or may be performed by a component of a location management function network element, for example, a processor, a chip, or a chip system of the location management function network element, or may be implemented by a logical module or software that can implement all or some of location management function network elements. The following provides descriptions by using an example in which the method is performed by the location management function network element. The information transmission method includes: sending a first request message to an access network device, where the first request message is used to request positioning signal configuration information of a terminal device, and the request message carries first information, the first information is used to identify a positioning measurement corresponding to the terminal device, and the positioning measurement corresponding to the terminal device is a positioning measurement performed by the access network device on the positioning signal sent by the terminal device.

With reference to the second aspect, in a possible implementation, the first information includes an identifier of the positioning measurement corresponding to the terminal device.

With reference to the second aspect, in a possible implementation, the positioning signal is a sounding reference signal SRS.

With reference to the second aspect, in a possible implementation, the first request message is a positioning information request message.

With reference to the second aspect, in a possible implementation, the method provided in this embodiment of this application further includes: sending a second request message to the access network device, where the second request message is used to request the access network device to perform the positioning measurement corresponding to the terminal device, and the second request message carries the first information.

With reference to the second aspect, in a possible implementation, the second request message is a measurement request message.

For beneficial effects of the second aspect and the possible implementations of the second aspect, refer to the beneficial effects of the first aspect and the possible implementations of the first aspect. Details are not described herein again.

According to a third aspect, an information transmission method is provided. The method may be performed by an access network device, or may be performed by a component of an access network device, for example, a processor, a chip, or a chip system of the access network device, or may be implemented by a logical module or software that can implement all or some of access network devices. The following provides descriptions by using an example in which the method is performed by the access network device. The information transmission method includes: receiving a second request message from a location management function network element, where the second request message is used to request an access network device to perform a positioning measurement, and a measurement request message carries second information. The second information indicates a terminal device corresponding to the positioning measurement, and the positioning measurement is a positioning measurement performed by the access network device on a positioning signal sent by the terminal device.

In this embodiment of this application, the access network device may learn, via the second information carried in the second request message, of the terminal device corresponding to the positioning measurement. Because there is a correspondence between the terminal device and the positioning measurement, the access network device may directly perform the positioning measurement on the positioning signal sent by the terminal device. If the positioning signal of the terminal device changes subsequently, the access network device may further directly continue to perform, based on a correspondence between the terminal device and the positioning measurement, the positioning measurement on the signal sent by the terminal device, thereby avoiding an operation of transmitting a measurement update message between the access network device and the location management function network element, so that the access network device can perform the positioning measurement corresponding to the terminal device in time, and further avoid delaying the access network device to perform the positioning measurement corresponding to the terminal device.

With reference to the third aspect, in a possible implementation, the method provided in this embodiment of this application further includes: performing, when the positioning signal sent by the terminal device changes, the positioning measurement on the changed positioning signal sent by the terminal device.

With reference to the third aspect, in a possible implementation, the second information includes an identifier of the terminal device or an association identifier.

Because the second request message is used to request the access network device to perform a positioning measurement, the second request message is a message related to the positioning measurement. The second information may be carried in the measurement request message. In other words, the second information is also information related to the positioning measurement, and the association identifier may be associated with the positioning measurement and the terminal device. Therefore, in this case, the second information includes the identifier of the terminal device or the association identifier, so that after receiving the measurement request message, the access network device can learn that the positioning measurement is the positioning measurement corresponding to the terminal device.

With reference to the third aspect, in a possible implementation, the positioning signal is a sounding reference signal SRS.

With reference to the third aspect, in a possible implementation, the second request message is a measurement request message.

With reference to the third aspect, in a possible implementation, before receiving the second request message from the location management function network element, the method provided in this embodiment of this application further includes: sending a positioning information response message to the location management function network element, where the positioning information response message indicates positioning signal configuration information of the terminal device, and the positioning information response message carries the second information.

In other words, the access network device may notify the location management function network element of the second information in advance, so that the location management function network element can subsequently add the second information to the measurement request message. In addition, because the positioning information response message is a message exchanged in an SRS measurement procedure, when the second information is carried in the positioning information response message, it may indicate that the information transmission method described in this embodiment of this application may be further applied to an SRS measurement scenario.

According to a fourth aspect, an information transmission method is provided. The method may be performed by a location management function network element, or may be performed by a component of a location management function network element, for example, a processor, a chip, or a chip system of the location management function network element, or may be implemented by a logical module or software that can implement all or some of location management function network elements. The following provides descriptions by using an example in which the method is performed by the location management function network element. The information transmission method includes: sending a second request message to an access network device, where the second request message is used to request the access network device to perform a positioning measurement, and a measurement request message carries second information. The second information indicates a terminal device corresponding to the positioning measurement, and the positioning measurement is a measurement performed based on a positioning signal sent by the terminal device.

With reference to the fourth aspect, in a possible implementation, the second information includes an identifier of the terminal device or an association identifier.

With reference to the fourth aspect, in a possible implementation, the positioning signal is a sounding reference signal SRS.

With reference to the fourth aspect, in a possible implementation, the second request message is a measurement request message.

With reference to the fourth aspect, in a possible implementation, before sending the second request message to the access network device, the method provided in this embodiment of this application further includes: receiving a positioning information response message from the access network device, where the positioning information response message indicates positioning signal configuration information of the terminal device, and the positioning information response message carries the second information.

For beneficial effects of the fourth aspect and the possible implementations of the fourth aspect, refer to the beneficial effects of the third aspect and the possible implementations of the third aspect. Details are not described herein again.

According to a fifth aspect, a communication apparatus is provided to implement the foregoing methods. The communication apparatus may be the access network device in any one of the first aspect or the implementations of the first aspect, or an apparatus including the access network device, or an apparatus included in the access network device, for example, a chip. Alternatively, the communication apparatus may be the location management function network element in any one of the second aspect or the implementations of the second aspect, or an apparatus including the location management function network element, or an apparatus included in the location management function network element, for example, a chip. Alternatively, the communication apparatus may be the access network device in any one of the third aspect or the implementations of the third aspect, or an apparatus including the access network device, or an apparatus included in the access network device, for example, a chip. Alternatively, the communication apparatus may be the location management function network element in any one of the fourth aspect or the implementations of the fourth aspect, or an apparatus including the location management function network element, or an apparatus included in the location management function network element, for example, a chip. The communication apparatus includes a corresponding module, unit, or means (means) for implementing the foregoing method. The module, unit, or means may be implemented by using hardware or software, or implemented by using hardware by executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface. The processing module may be configured to implement a processing function in any one of the foregoing aspects and any one of the possible implementations of the foregoing aspects.

In some possible designs, the transceiver module includes a sending module and a receiving module, respectively configured to implement the sending function and the receiving function in any one of the foregoing aspects and any one of the possible implementations of the foregoing aspects.

According to a sixth aspect, a communication apparatus is provided, including a processor and a memory. The memory is configured to store computer instructions. When the processor executes the instructions, the communication apparatus is enabled to perform the method in any one of the foregoing aspects. The communication apparatus may be the access network device in any one of the first aspect or the implementations of the first aspect, or an apparatus including the access network device, or an apparatus included in the access network device, for example, a chip. Alternatively, the communication apparatus may be the location management function network element in any one of the second aspect or the implementations of the second aspect, or an apparatus including the location management function network element, or an apparatus included in the location management function network element, for example, a chip. Alternatively, the communication apparatus may be the access network device in any one of the third aspect or the implementations of the third aspect, or an apparatus including the access network device, or an apparatus included in the access network device, for example, a chip. Alternatively, the communication apparatus may be the location management function network element in any one of the fourth aspect or the implementations of the fourth aspect, or an apparatus including the location management function network element, or an apparatus included in the location management function network element, for example, a chip.

According to a seventh aspect, a communication apparatus is provided, including a processor and a communication interface. The communication interface is configured to communicate with a module other than the communication apparatus. The processor is configured to execute a computer program or instructions, so that the communication apparatus performs the method in any one of the foregoing aspects. The communication apparatus may be the access network device in any one of the first aspect or the implementations of the first aspect, or an apparatus including the access network device, or an apparatus included in the access network device, for example, a chip. Alternatively, the communication apparatus may be the location management function network element in any one of the second aspect or the implementations of the second aspect, or an apparatus including the location management function network element, or an apparatus included in the location management function network element, for example, a chip. Alternatively, the communication apparatus may be the access network device in any one of the third aspect or the implementations of the third aspect, or an apparatus including the access network device, or an apparatus included in the access network device, for example, a chip. Alternatively, the communication apparatus may be the location management function network element in any one of the fourth aspect or the implementations of the fourth aspect, or an apparatus including the location management function network element, or an apparatus included in the location management function network element, for example, a chip.

According to an eighth aspect, a communication apparatus is provided, including at least one processor. The processor is configured to execute a computer program or instructions stored in a memory, so that the communication apparatus performs the method in any one of the foregoing aspects. The memory may be coupled to the processor, or may be independent of the processor. The communication apparatus may be the access network device in any one of the first aspect or the implementations of the first aspect, or an apparatus including the access network device, or an apparatus included in the access network device, for example, a chip. Alternatively, the communication apparatus may be the location management function network element in any one of the second aspect or the implementations of the second aspect, or an apparatus including the location management function network element, or an apparatus included in the location management function network element, for example, a chip. Alternatively, the communication apparatus may be the access network device in any one of the third aspect or the implementations of the third aspect, or an apparatus including the access network device, or an apparatus included in the access network device, for example, a chip. Alternatively, the communication apparatus may be the location management function network element in any one of the fourth aspect or the implementations of the fourth aspect, or an apparatus including the location management function network element, or an apparatus included in the location management function network element, for example, a chip.

According to a ninth aspect, a computer-readable storage medium is provided. The computer-readable storage medium stores a computer program or instructions. When the computer program or the instructions are run on a communication apparatus, the communication apparatus is enabled to perform the method in any one of the foregoing aspects or any implementation thereof.

According to a tenth aspect, a computer program product including instructions is provided. When the computer program product runs on a communication apparatus, the communication apparatus is enabled to perform the method in any one of the foregoing aspects or any implementation thereof.

According to an eleventh aspect, a communication apparatus (for example, the communication apparatus may be a chip or a chip system) is provided. The communication apparatus includes a processor, configured to implement a function in any one of the foregoing aspects or the implementations of the aspects.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that when the communication apparatus provided in any one of the fifth aspect to the eighth aspect is a chip, the foregoing sending action/function may be understood as outputting, and the foregoing receiving action/function may be understood as inputting.

According to a twelfth aspect, an information transmission method is provided. The information transmission method includes the method according to any one of the first aspect or the implementations of the first aspect, the method according to any one of the second aspect or the implementations of the second aspect, the method according to any one of the third aspect or the implementations of the third aspect, and the method according to any one of the fourth aspect or the implementations of the fourth aspect.

According to a thirteenth aspect, a communication system is provided. The communication system includes the access network device in the foregoing aspect and the location management function network element in the foregoing aspect.

For technical effect brought by any implementation of the fifth aspect to the thirteenth aspect, refer to the technical effect brought by the corresponding implementation of the first aspect to the fourth aspect. Details are not described herein.

It should be noted that various possible implementations of any one of the foregoing aspects may be combined provided that the solutions are not contradictory.

### BRIEF DESCRIPTION OF DRAWINGS

FIG. 1 is a schematic flowchart of a positioning measurement procedure according to an embodiment of this application;
FIG. 2 is a schematic flowchart of a positioning measurement update procedure according to an embodiment of this application;
FIG. 3 is a diagram of a structure of a communication system according to an embodiment of this application;
FIG. 4 is a diagram of a structure of a communication apparatus according to an embodiment of this application;
FIG. 5 is a schematic flowchart of an information transmission method according to an embodiment of this application;
FIG. 6A and FIG. 6B are a diagram of a positioning measurement update according to an embodiment of this application;
FIG. 7 is a schematic flowchart of another information transmission method according to an embodiment of this application; and
FIG. 8 is a diagram of a structure of another communication apparatus according to an embodiment of this application.

### DESCRIPTION OF EMBODIMENTS

To facilitate understanding of technical solutions provided in embodiments of this application, technologies related to this application are first briefly described. The brief descriptions are as follows:
1. Positioning measurement technology: The positioning measurement technology is a technology in which positioning measurement is performed through communication between a user equipment (user equipment, UE) and an access network device, to obtain information like a location of the UE or a relative location between UEs.

A 5th generation mobile communication technology (5th generation mobile communication technology, 5G) network is used as an example. A UE in the 5G network may be configured to send a positioning signal. An access network device in the 5G network may measure the positioning signal sent by the UE, to obtain a positioning measurement result, and send the positioning measurement result to a core network in the 5G network (5G core network, 5GC). The 5GC may include an LMF and an access and mobility management function (access and mobility management function, AMF). The AMF provides a communication tunnel for the LMF and the access network device, and the LMF is configured to control a positioning measurement procedure of the access network device and process a reported positioning measurement result, to obtain location information of the UE.

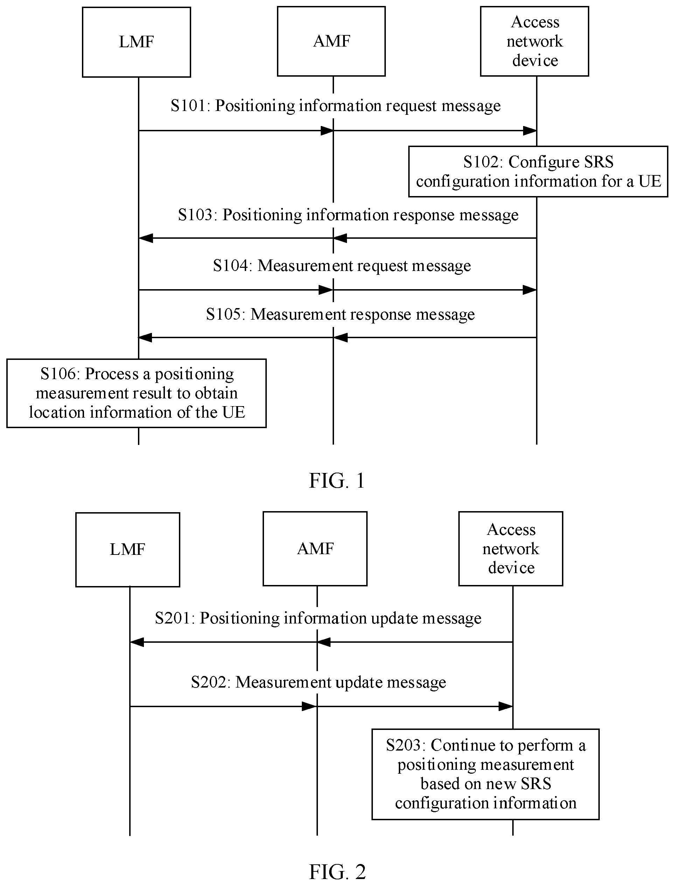

As shown in FIG. 1, in various embodiments of this application, a positioning measurement procedure may specifically include the following steps.

S101: An LMF sends a positioning information request (positioning information request) message to an access network device via an access and mobility management function (access and mobility management function, AMF), and correspondingly, the access network device receives a positioning information request message from the LMF via the AMF.

The positioning information request message is used to request sounding reference signal (sounding reference signal, SRS) configuration information of UE.

Specifically, the LMF sends the positioning information request message to the AMF. Correspondingly, the AMF receives the positioning information request message from the LMF. The AMF sends, to the access network device, a downlink UE associated radio access network application part (radio access network application part, NRPPA) transport (downlink UE associated NRPPA transport) message. Correspondingly, the access network device receives, from the AMF, the downlink UE associated NRPPA transport message. The downlink UE associated NRPPA transport message carries the positioning information request message.

It should be noted that, because the downlink UE associated NRPPA transport message carries identification information that can be used to identify the UE, for example, LMF UE next generation access protocol (next generation access protocol, NGAP) identification information or AMF UE NGAP identification information, the downlink UE associated NRPPA transport message is a message related to a UE.

S102: The access network device configures SRS configuration information for the UE.

In some examples, the SRS configuration information may include at least one of the following: a bandwidth, a frequency, a subcarrier spacing, or a period. Certainly, the foregoing is merely an example description of the SRS configuration information. The SRS configuration information may further include other information. This is not limited in this application.

S103: The access network device sends a positioning information response (positioning information response) message to the LMF via the AMF, and correspondingly, the LMF receives the positioning information response message from the access network device via the AMF.

The positioning information response message includes the SRS configuration information of the UE.

Specifically, the access network device sends an uplink UE associated NRPPA transport (uplink UE associated NRPPA transport) message to the AMF. Correspondingly, the AMF receives the uplink UE associated NRPPA transport message from the access network device. The uplink UE associated NRPPA transport message carries the positioning information response message. The AMF sends the positioning information response message to the LMF. Correspondingly, the LMF receives the positioning information response message from the AMF.

It should be noted that, because the uplink UE associated NRPPA transport (uplink UE associated NRPPA transport) message carries identification information used to identify the UE, for example, LMF UE NGAP identification information or AMF UE NGAP identification information, the uplink UE associated NRPPA transport message is a message related to the UE.

S104: The LMF sends a measurement request (measurement request) message to the access network device via the AMF, and correspondingly, the access network device receives the measurement request message from the LMF via the AMF.

The measurement request message indicates the access network device to perform a positioning measurement, and the positioning measurement is a positioning measurement performed on an SRS.

Specifically, the LMF sends the measurement request message to the AMF. Correspondingly, the AMF receives the measurement request message from the LMF. The AMF sends a downlink non UE associated NRPPA transport (downlink non UE associated NRPPA transport) message to the access network device. Correspondingly, the access network device receives the downlink non UE associated NRPPA transport message from the AMF. The downlink non UE associated NRPPA transport message carries the measurement request message.

It should be noted that, because the downlink non UE associated NRPPA transport message does not carry identification information that can be used to identify the UE, the downlink non UE associated NRPPA transport message is a message irrelevant to the UE.

S105: The access network device sends a measurement response (measurement response) message to the LMF via the AMF, and correspondingly, the LMF receives the measurement response message from the access network device via the AMF.

The measurement response message includes the positioning measurement result.

Specifically, the access network device sends the uplink non UE associated NRPPA transport (uplink non UE associated NRPPA transport) message to the AMF. Correspondingly, the AMF receives the uplink non UE associated NRPPA transport message from the access network device. The uplink non UE associated NRPPA transport carries the measurement response message. The AMF sends the measurement response message to the LMF. Correspondingly, the LMF receives the measurement response message from the AMF.

It should be noted that, because the uplink non UE associated NRPPA transport message does not carry identification information that can be used to identify the UE, the uplink non UE associated NRPPA transport message is a message irrelevant to the UE.

S106: The LMF processes the positioning measurement result to obtain location information of the UE.

However, the SRS configuration information of the UE is likely to change. For example, a camping cell of the UE is handed over from a cell 1 to a cell 2. In this case, the access network device needs to reconfigure new SRS configuration information for the UE, that is, the SRS configuration information of the UE changes. If the SRS configuration information of the UE changes, the 5G network is used as an example. As shown in FIG. 2, in each embodiment of this application, a positioning measurement update process may include the following steps.

S201: An access network device sends a positioning information update (positioning information update) message to an LMF via an AMF, and correspondingly, the LMF receives the positioning information update message from the access network device via the AMF.

The positioning information update message indicates new SRS configuration information configured by the access network device for the UE.

For example, it is assumed that a camping cell of the UE is handed over from a cell 1 to a cell 2. The new SRS configuration information may include SRS configuration information configured by the access network device for the UE camping on the cell 2.

S202: The LMF sends a measurement update (measurement update) message to the access network device via the AMF, and correspondingly, the access network device receives the measurement update message from the LMF via the AMF.

The measurement update message indicates the access network device to continue to perform the positioning measurement based on the new SRS configuration information.

Specifically, the LMF sends the measurement update message to the AMF. Correspondingly, the AMF receives the measurement update message from the LMF. The AMF sends the measurement update message to the access network device. Correspondingly, the access network device receives the measurement update message from the AMF.

It should be noted that, because the measurement update message does not carry identification information used to identify the UE, and a message carrying the measurement update message also does not carry identification information that can be used to identify the UE, the measurement update message is a message irrelevant to the UE.

S203: The access network device continues to perform the positioning measurement based on the new SRS configuration information.

As described in the foregoing related description of the "positioning measurement technology", the access network device may perform a positioning measurement on a positioning signal based on a request message (for example, a measurement request message). However, because the measurement request message is a message irrelevant to the UE, the access network device cannot associate the terminal device with the positioning measurement. As a result, the access network device cannot learn that the positioning measurement is performed on the positioning signal sent by the terminal device. If a positioning signal subsequently sent by the terminal device changes, the access network device can obtain the measurement update message only from the LMF side, so as to continue to perform, based on the measurement update message, the positioning measurement on the positioning signal sent by the terminal device. Therefore, it is likely to delay the positioning measurement performed by the access network device on the positioning signal sent by the terminal device.

Based on this, this application provides an information transmission method, where the access network device may learn, via the first information carried in the first request message, the positioning measurement corresponding to the terminal device. Because there is a correspondence between the terminal device and the positioning measurement, the access network device may directly perform the positioning measurement on the positioning signal sent by the terminal device. If the positioning signal of the terminal device changes subsequently, the access network device may further directly continue to perform, based on a correspondence between the terminal device and the positioning measurement, the positioning measurement on the signal sent by the terminal device, thereby avoiding an operation of transmitting a measurement update message between the access network device and the location management function network element, so that the access network device can perform the positioning measurement corresponding to the terminal device in time, and further avoid delaying the access network device to perform the positioning measurement corresponding to the terminal device.
1. In embodiments of this application, for ease of description, when numbering is involved, numbering may be performed consecutively starting from 1, or may be performed consecutively starting from 0, or may be performed starting from any parameter. It should be understood that the foregoing descriptions are all settings for ease of describing the technical solutions provided in embodiments of this application, but are not intended to limit the scope of embodiments of this application.
2. "Predefined" or "preconfigured" may be implemented by pre-storing corresponding code or a corresponding table, or in another manner that may indicate related information in a device (for example, an access network device or a location management function network element). A specific implementation of "predefined" or "preconfigured" is not limited in this embodiment of this application. "Storing" may mean storing in one or more memories. The one or more memories may be separately disposed, or may be integrated into an encoder, a decoder, a processor, or a communication apparatus. Alternatively, a part of the one or more memories may be separately disposed, and a part may be integrated into a decoder, a processor, or a communication apparatus. A type of the memory may be a storage medium in any form. This is not limited in embodiments of this application.
3. A "protocol" in embodiments of this application may be a standard protocol in the communication field, and for example, may include a long term evolution (long term evolution, LTE) protocol, a new radio (new radio, NR) protocol, and a related protocol used in a future communication system. This is not limited in embodiments of this application.
4. In embodiments of this application, descriptions such as "when...", "in a case of...", "if", and "it is assumed that" all mean that a device (for example, an access network device or a location management function network element) performs corresponding processing in an objective case, and are not intended to limit time. In addition, it is not required that the device (for example, the access network device or the location management function network element) needs to perform a determining action during implementation, and does not mean that there is another limitation.
5. In the descriptions of this application, "/" represents an "or" relationship between associated objects unless otherwise specified. For example, A/B may represent A or B. The term "and/or" in embodiments of this application describes only an association relationship between associated objects and indicates that three relationships may exist. For example, A and/or B may indicate the following three cases: Only A exists, both A and B exist, and only B exists, where A and B may be singular or plural. In addition, in the descriptions of embodiments of this application, unless otherwise specified, "a plurality of" means two or more. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to give an example, an illustration, or a description. Any embodiment or design scheme described as an "example" or "for example" in embodiments of this application should not be explained as being more preferred or having more advantages than another embodiment or design scheme. Specifically, the words such as "example" or "for example" are used to present a related concept in a specific manner for ease of understanding.

Embodiments of this application are applicable to an LTE system, an NR system (which may also be referred to as a 5G system), a vehicle to everything (vehicle to everything, V2X) system, an LTE-NR hybrid networking system, a device-to-device (device-to-device, D2D) system, a machine to machine (machine to machine, M2M) communication system, an internet of things (internet of thing, IoT) system (for example, a narrowband internet of things (narrowband internet of thing, NB-IoT) system), and another next-generation communication system. Alternatively, the communication system may be a non-3GPP communication system. This is not limited.

In addition, a communication architecture and a service scenario described in embodiments of this application are intended to describe the technical solutions in embodiments of this application more clearly, and do not constitute a limitation on the technical solutions provided in embodiments of this application. A person of ordinary skill in the art may learn that with the evolution of the communication architecture and the emergence of new service scenarios, the technical solutions provided in embodiments of this application are also applicable to similar technical problems.

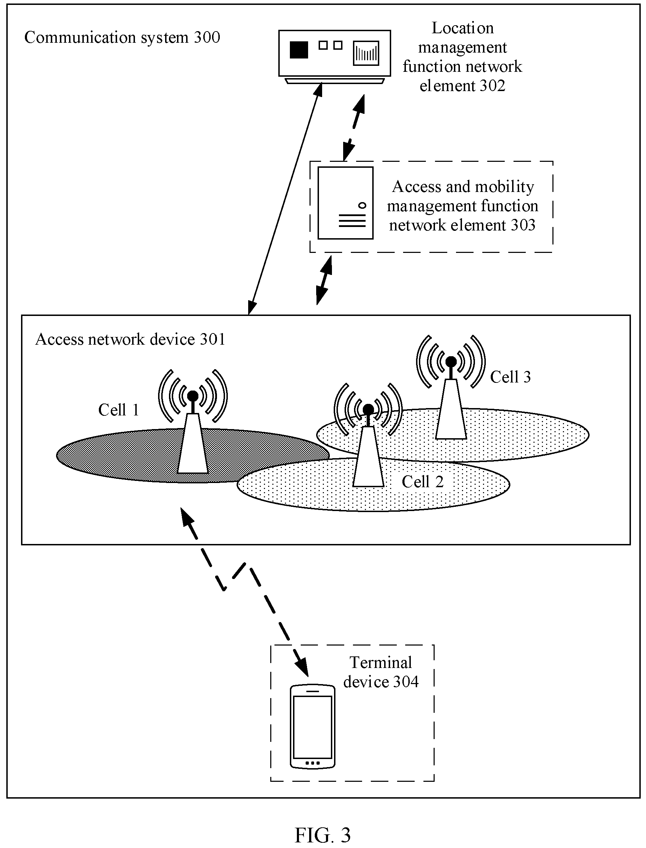

FIG. 3 is a diagram of a structure of a communication system according to an embodiment of this application. The communication system 300 includes an access network device 301 and a location management function network element 302. Optionally, the communication system 300 may further include an access and mobility management function network element 303. The access network device 301 and the location management function network element 302 may communicate with each other by using the access and mobility management function network element 303.

In a possible implementation, the location management function network element 302 sends a first request message to the access network device 301, and the access network device 301 receives the first request message from the location management function network element 302, where the first request message is used to request positioning signal configuration information of a terminal device, and the first request message carries first information. The first information is used to identify a positioning measurement corresponding to the terminal device, and the positioning measurement corresponding to the terminal device is a positioning measurement performed by the access network device on the positioning signal sent by the terminal device. For a specific implementation and related technical effects of the solution, refer to subsequent method embodiments. Details are not described herein.

In a possible implementation, the location management function network element 302 sends a second request message to the access network device 301, and the access network device 301 receives the second request message from the location management function network element 302, where the second request message is used to request the access network device to perform a positioning measurement, and the measurement request message carries second information. The second information indicates a terminal device corresponding to the positioning measurement, and the positioning measurement is a positioning measurement performed by the access network device on a positioning signal sent by the terminal device. For a specific implementation and related technical effects of the solution, refer to subsequent method embodiments. Details are not described herein.

In a possible implementation, the access network device in this embodiment of this application may cover N cells (for example, a cell 1, a cell 2, and a cell 3). For example, the access network device may include an evolved NodeB (NodeB or eNB or e-NodeB, evolutional NodeB) in an LTE system or an LTE-advanced (LTE-advanced, LTE-A) system, for example, a conventional macro base station eNB and a micro base station eNB in a heterogeneous network scenario. Alternatively, the access network device may include a next generation NodeB (next generation NodeB, gNB) in an NR system. Alternatively, the access network device may include a transmission reception point (transmission reception point, TRP), a home NodeB (for example, home evolved NodeB or home NodeB, HNB), a baseband unit (baseband unit, BBU), a baseband unit pool (BBU pool), a wireless fidelity (wireless fidelity, Wi-Fi) access point (access point, AP), and the like. Alternatively, the access network device may include a base station in a non-terrestrial network (non-terrestrial network, NTN), that is, may be deployed on a flight platform or a satellite. In the NTN, the access network device or the access device may be used as a layer 1 (L1) relay (relay), or may be used as a base station, or may be used as an integrated access and backhaul (integrated access and backhaul, IAB) node. Alternatively, the access network device may be a device that is in an IoT and that implements functions of a base station, for example, a device that is in uncrewed aerial vehicle communication, V2X, D2D, or machine-to-machine (machine-to-machine, M2M) and that implements the functions of the base station.

In some possible scenarios, the access network device in embodiments of this application may alternatively be a module or unit that can implement some functions of the base station. For example, the access network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or a CU-CP and a CU-UP), the DU, or the RU may alternatively have different names, but a person skilled in the art may understand meanings thereof. For example, the access network device may be an access network device or a module of an access network device in an open radio access network (open RAN, ORAN) system. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

Optionally, the base station in embodiments of this application may include various forms of base stations, for example, a macro base station, a micro base station (or referred to as a small cell), a relay station, an access point, a home base station, a TRP, a transmitting point (transmitting point, TP), or a mobile switching center. This is not specifically limited in embodiments of this application.

In a possible implementation, the location management function network element 302 is an LMF. The LMF is a device that is deployed in a core network and that provides a positioning function for a communication network. As shown in FIG. 3, the access network device 301 may communicate with the LMF via the access and mobility management function network element 303.

In a possible implementation, the access and mobility management function network element 303 is an AMF. The AMF is a device that is deployed in the core network, meets a 5G standard, and can provide an access and mobility management function for a communication network. The AMF is mainly configured to perform registration, connection, reachability, and mobility management, and is configured to provide a message transmission channel for the access network device 301 and the location management function network element 302. Therefore, the AMF may be used as an access point between the access network device 301 and the core network.

Optionally, as shown in FIG. 3, the communication system 300 may further include a terminal device 304.

In a possible implementation, the terminal device in this embodiment of this application may be, for example, UE, an access terminal, a terminal unit, a terminal station, a mobile station, a mobile console, a remote station, a remote terminal, a mobile device, a wireless communication device, a terminal agent, or a terminal device in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. In a possible implementation, the terminal device may be mobile or fixed.

In a possible implementation, the access network device and the location management function network element in this embodiment of this application may also be referred to as a communication apparatus, and may be a general-purpose device or a dedicated device. This is not specifically limited in this embodiment of this application.

In a possible implementation, related functions of the access network device or the location management function network element in embodiments of this application may be implemented by one device, or may be implemented by a plurality of devices together, or may be implemented by one or more functional modules in one device. This is not specifically limited in embodiments of this application. It may be understood that the foregoing function may be a network element in a hardware device, may be a software function running on dedicated hardware, a combination of hardware and software, or a virtualization function instantiated on a platform (for example, a cloud platform).

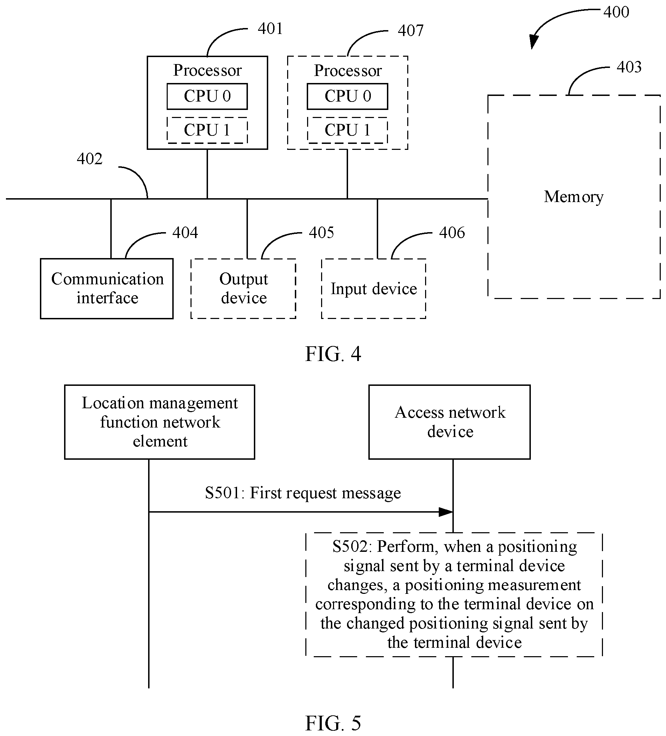

For example, related functions of the access network device or the location management function network element in embodiments of this application may be implemented by using the communication apparatus 400 in FIG. 4. FIG. 4 is a diagram of a structure of the communication apparatus 400 according to an embodiment of this application. The communication apparatus 400 includes one or more processors 401, a communication line 402, and at least one communication interface (where in FIG. 4, only an example in which a communication interface 404 and one processor 401 are included is used for description), and may further include a memory 403.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a channel for connecting different components.

The communication interface 404 may be a transceiver module configured to communicate with another device or a communication network, such as an Ethernet, a RAN, or a wireless local area network (wireless local area network, WLAN). For example, the transceiver module may be an apparatus like a transceiver or a transceiver machine. In a possible implementation, the communication interface 404 may alternatively be a transceiver circuit in the processor 401, and is configured to implement signal input and signal output of the processor.

The memory 403 may be an apparatus having a storage function. For example, the memory 403 may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer, but is not limited thereto. The memory may exist independently, and is connected to the processor through the communication line 402. The memory may alternatively be integrated with the processor.

The memory 403 is configured to store computer-executable instructions for performing the solutions in this application, and the processor 401 controls execution. The processor 401 is configured to execute the computer-executable instructions stored in the memory 403, to implement an information transmission method provided in embodiments of this application.

Alternatively, in this embodiment of this application, the processor 401 may perform a processing-related function in the information transmission method provided in the following embodiments of this application, and the communication interface 404 is responsible for communicating with another device or a communication network. This is not specifically limited in embodiments of this application.

In a possible implementation, the memory 403 in this embodiment of this application may be further configured to store information or a parameter described in the following embodiments, for example, first indication information.

The computer-executable instructions in embodiments of this application may also be referred to as application code. This is not specifically limited in embodiments of this application.

During specific implementation, in an embodiment, the processor 401 may include one or more CPUs, for example, a CPU 0 and a CPU 1 in FIG. 4.

During specific implementation, in an embodiment, the communication apparatus 400 may include a plurality of processors, for example, the processor 401 and a processor 407 in FIG. 4. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 400 may further include an output device 405 and an input device 406. The output device 405 communicates with the processor 401, and may display information in a plurality of manners.

The communication apparatus 400 may be a general-purpose apparatus or a dedicated apparatus. For example, the communication apparatus 400 may be a desktop computer, a portable computer, a network server, an embedded device, or a device having a structure similar to that in FIG. 4. A type of the communication apparatus 400 is not limited in this embodiment of this application.

With reference to FIG. 5, the following describes information transmission methods provided in embodiments of this application.

It should be noted that in the following embodiments of this application, a name of a message between network elements, a name of each parameter, a name of each piece of information, or the like is merely an example, and may be another name in another embodiment. This is not specifically limited in the method provided in embodiments of this application.

It may be understood that in embodiments of this application, each network element may perform some or all of the steps in embodiments of this application. These steps or operations are merely examples. In embodiments of this application, other operations or variations of various operations may be further performed. In addition, the steps may be performed in a sequence different from that presented in embodiments of this application, and not all of the operations in embodiments of this application may be necessarily performed.

FIG. 5 is an example of an information transmission method according to an embodiment of this application. The method is described by using an example in which an access network device interacts with a location management function network element. Certainly, a subject performing actions of the access network device in the method may alternatively be an apparatus/module in the access network device, for example, a chip, a processor, or a processing unit in the access network device. A subject performing actions of the location management function network element in the method may alternatively be an apparatus/module in the location management function network element, for example, a chip, a processor, or a processing unit in the location management function network element. This is not specifically limited in this embodiment of this application. For example, as shown in FIG. 5, the information transmission method includes the following steps.

S501: A location management function network element sends a first request message to an access network device, and correspondingly, the access network device receives the first request message from the location management function network element.

The first request message carries first information. The first information is used to identify a positioning measurement corresponding to a terminal device. The positioning measurement corresponding to the terminal device is a positioning measurement performed by the access network device on a positioning signal sent by the terminal device.

Optionally, the location management function network element may communicate with the access network device via an access and mobility management function network element. In this case, S501 may be replaced with the following: The location management function network element sends the first request message to the access and mobility management function network element, and correspondingly, the access and mobility management function network element receives the first request message sent by the location management function network element. The access and mobility management function network element sends the first request message to the access network device. Correspondingly, the access network device receives the first request message from the access and mobility management function network element.

In an example, the positioning signal is an SRS. Certainly, the foregoing is merely an example description of the positioning signal. The positioning signal may alternatively be another positioning signal, for example, a positioning reference signal (positioning reference signal, PRS). This is not limited in this application.

In a possible implementation, the first request message is the positioning information request (positioning information request) message recorded in S101. Further, the access network device may add the first information to the positioning information request (positioning information request) message recorded in S101.

In a possible implementation, the first information includes an identifier of the positioning measurement corresponding to the terminal device.

Optionally, the identifier of the positioning measurement corresponding to the terminal device may be the same as an LMF measurement identifier (Identity document, ID) (LMF measurement ID) in the measurement request message (for example, the measurement request (measurement request) message recorded in S104) sent by the location management function network element. Certainly, the foregoing is merely an example description of the identifier of the positioning measurement corresponding to the terminal device. The identifier of the positioning measurement corresponding to the terminal device may alternatively be another identifier. This is not limited in this embodiment of this application.

For example, Table 1 below provides an example of the positioning information request message. As shown in Table 1, the positioning information request message may include a message type (message type), an NRPPA transaction ID (NRPPA transaction ID), an LMF measurement ID (LMF measurement ID), requested SRS transmission characteristics (requested SRS transmission characteristics), UE reporting information (UE reporting information), a UE terminal equipment tunnel group (terminal equipment tunnel group, TEG) information request (UE TEG information request), and a UE TEG reporting periodicity (UE TEG reporting periodicity). The LMF measurement ID (LMF measurement ID) may be the identifier of the positioning measurement corresponding to the terminal device recorded in this embodiment of this application.

In addition, for understanding of presence (presence), range (range), IE type and reference (IE type and reference), semantic description (semantics description), criticality (criticality), and assigned criticality (assigned criticality) of each piece of information included in the positioning information request message, refer to Table 1. Details are not described herein again.

**Table 1**

| IE/Group name | Presence | Range | IE type and reference | Semantics description | Criticality | Assigned criticality |
|---|---|---|---|---|---|---|
| Message type | M | | 9.2.3 | | Yes | Reject |
| NRPPa transaction ID | M | | 9.2.4 | | - | |
| LMF measurement ID | M | | INTEGER (1...65536, ...) | | Yes | Reject |
| Requested SRS transmission characteristics | O | | 9.2.27 | | Yes | Ignore |
| UE reporting information | O | | 9.2.70 | | Yes | Ignore |
| UE TEG information request | O | | ENUMERATED(onDemand , periodic, stop, ...) | | Yes | Ignore |
| UE TEG reporting periodicity | C-ifUeTegInfoReqPeriodic | | ENUMERATED (160 ms, 320 ms, 1280 ms, 2560 ms, 61440 ms, 81920 ms, 368640 ms, 737280 ms, ...) | | Yes | Reject |

Certainly, the foregoing is merely an example description of the positioning information request message. The positioning information request message may alternatively be other information. This is not limited in this embodiment of this application.

It may be understood that, because the request message is used to request the configuration information of the positioning signal sent by the terminal device, the request message is a message related to the terminal device. The first information may be carried in the request message. In other words, the first information is also information related to the terminal device. Therefore, in this case, the first information includes the identifier of the positioning measurement corresponding to the terminal device, so that the access network device can learn, after receiving the request message, that the positioning measurement is the positioning measurement corresponding to the terminal device.

As can be learned from the foregoing related descriptions about the "positioning measurement update procedure", when the SRS configuration information of the UE changes, the access network device needs to report the changed SRS configuration information of the UE again. The LMF determines a measurement update message based on the changed SRS configuration information of the UE, and delivers the measurement update message to the access network device. The access network device can obtain the measurement update message only from the LMF, so as to continue to perform, based on the measurement update message, the positioning measurement on the positioning signal sent by the terminal device. In other words, before S202, even if the SRS configuration information of the UE changes, the access network device still performs the positioning measurement on the positioning signal before the change. This likely causes a problem that positioning measurement is interrupted or a positioning measurement result is inaccurate. In view of this, optionally, the information transmission method recorded in this embodiment of this application may further include the following step S502.

S502: The access network device performs, when the positioning signal sent by the terminal device changes, the positioning measurement corresponding to the terminal device on the changed positioning signal sent by the terminal device.

It may be understood that, that the positioning signal sent by the terminal device changes may also be understood as that positioning signal configuration information of the terminal device changes.

In a possible implementation, an implementation process of S502 may be as follows: When the positioning signal changes, the access network device may update, based on an actual change of the positioning signal, measurement information (for example, a time-frequency domain resource required by the access network device to perform the positioning measurement corresponding to the terminal device) required by the access network device to perform the positioning measurement corresponding to the terminal device, and perform, based on the determined measurement information, the positioning measurement corresponding to the terminal device on the changed positioning signal sent by the terminal device.

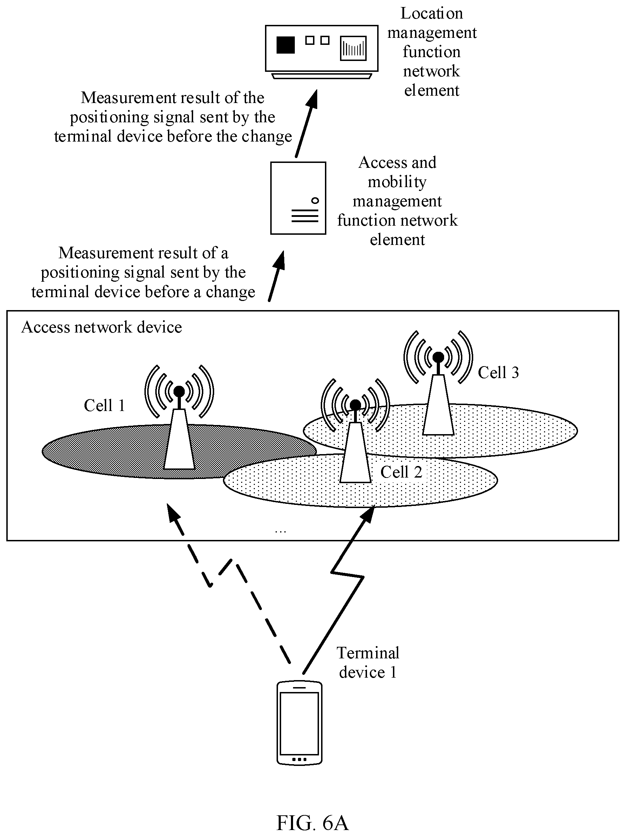

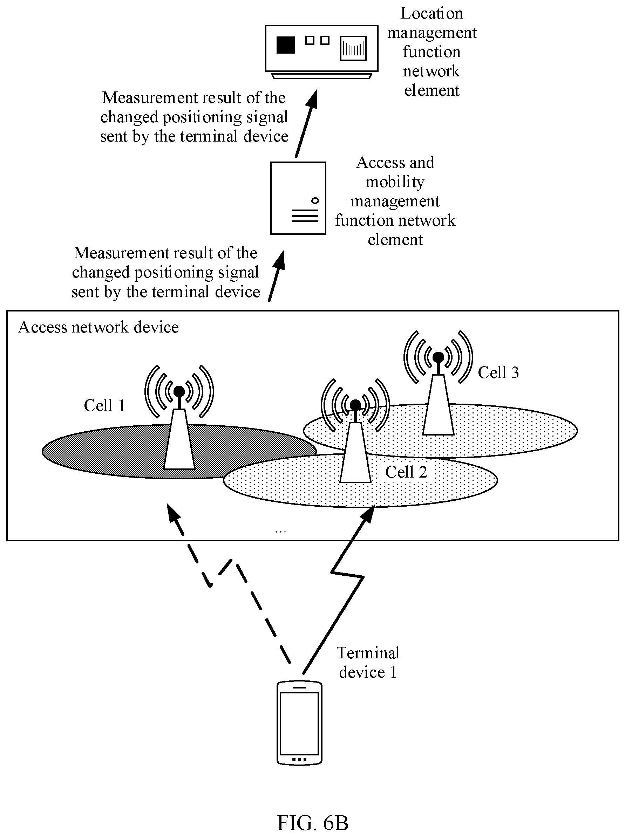

For example, as shown in FIG. 6A and FIG. 6B, it is assumed that the terminal device 1 is handed over from a cell 1 to a cell 2. The access network device needs to reconfigure positioning measurement configuration information for the terminal device 1 camping on the cell 2. In this way, the terminal device 1 sends a new positioning signal based on new SRS configuration information. In other words, the positioning signal sent by the terminal device 1 changes. As shown in FIG. 6A, if the existing positioning update procedure is used, before receiving the measurement update message, the access network device still measures the positioning signal sent by the terminal device before the change, and reports, to the location management function network element by using the access and mobility management function network element, a measurement result of the positioning signal sent by the terminal device before the change. However, as shown in FIG. 6B, the access network device provided in this embodiment of this application may directly perform, based on a correspondence between the terminal device and the positioning measurement, the positioning measurement corresponding to the terminal device on the changed positioning signal sent by the terminal device (for example, the positioning signal sent by the terminal device 1 camping on the cell 2). In addition, the access network device may report, to the location management function network element by using the access and mobility management function network element, a measurement result of the positioning signal sent by the changed terminal device.

It may be understood that, the access network device may directly perform, when the positioning signal sent by the terminal device changes, the positioning measurement corresponding to the terminal device on the changed positioning signal sent by the terminal device, instead of performing the positioning measurement corresponding to the terminal device on the positioning signal sent by the terminal device before the change. In this way, not only an operation of transmitting a measurement update message between the access network device and the location management function network element is avoided, but also impact of an invalid positioning signal on a positioning measurement result is avoided, thereby ensuring accuracy of the positioning measurement result obtained by the access network device through measurement.

Optionally, after S501, the access network device may further send a positioning information response message (for example, the positioning information response (positioning information response) message described in S103) to the location management function network element. Correspondingly, the location management function network element receives the positioning information response message from the access network device. The positioning information response message includes the positioning signal configuration information of the terminal device.

Optionally, after S501, the information transmission method provided in this embodiment of this application further includes: The location management function network element sends a second request message to the access network device. Correspondingly, the access network device may receive the second request message from the location management function network element, where the second request message is used to request the access network device to perform the positioning measurement corresponding to the terminal device, and the second request message carries the first information.

It may be understood that the second request message also carries the first information. In this way, the access network device may associate the first request message with the second request message via the first information. If one request message changes, the access network device may determine another request message based on an association relationship between the first request message and the second request message, and adaptively modify the another request message, so that changes of the first request message and the second request message can be synchronized, thereby avoiding confusion in a process in which the access network device performs positioning measurement.

In a possible implementation, the second request message is a measurement request message (for example, the measurement request (measurement request) message recorded in S104). However, because the measurement request message is a message exchanged in an SRS measurement procedure, when the second request message is a measurement request message, it may indicate that the information transmission method described in this embodiment of this application may be further applied to an SRS measurement scenario.

Optionally, after the location management function network element sends the second request message to the access network device, the access network device may further send a measurement response message (for example, the measurement response (measurement response) message recorded in S105) to the location management function network element. Correspondingly, the location management function network element receives the measurement response message from the access network device. The measurement response message includes the positioning measurement result of the terminal device.

This application provides an information transmission method. An access network device may learn, via the first information carried in a first request message, the positioning measurement corresponding to the terminal device. Because there is a correspondence between the terminal device and the positioning measurement, the access network device may directly perform the positioning measurement on the positioning signal sent by the terminal device. If the positioning signal of the terminal device changes subsequently, the access network device may further directly continue to perform, based on a correspondence between the terminal device and the positioning measurement, the positioning measurement on the signal sent by the terminal device, thereby avoiding an operation of transmitting a measurement update message between the access network device and the location management function network element, so that the access network device can perform the positioning measurement corresponding to the terminal device in time, and further avoid delaying the access network device to perform the positioning measurement corresponding to the terminal device.

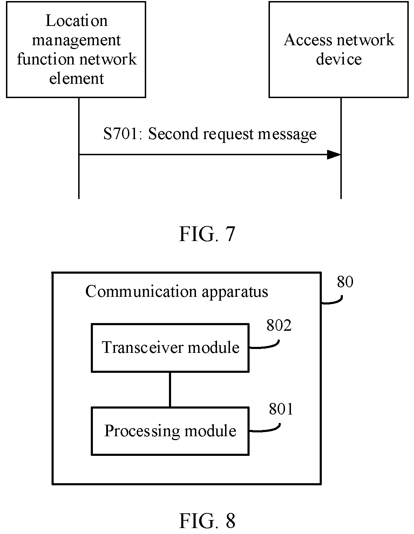

FIG. 7 is another example of an information transmission method according to an embodiment of this application. The method is described by using an example in which an access network device interacts with a location management function network element. Certainly, a subject performing actions of the access network device in the method may alternatively be an apparatus/module in the access network device, for example, a chip, a processor, or a processing unit in the access network device. A subject performing actions of the location management function network element in the method may alternatively be an apparatus/module in the location management function network element, for example, a chip, a processor, or a processing unit in the location management function network element. This is not specifically limited in this embodiment of this application. For example, as shown in FIG. 7, the information transmission method includes the following steps.

S701: A location management function network element sends a second request message to an access network device, and correspondingly, the access network device receives the second request message from the location management function network element.

The second request message is used to request the access network device to perform a positioning measurement. A measurement request message carries second information. The second information indicates a terminal device corresponding to the positioning measurement. The positioning measurement is a positioning measurement performed by the access network device on a positioning signal sent by the terminal device.

Optionally, the location management function network element may communicate with the access network device via an access and mobility management function network element. In this case, S701 may be replaced with the following: The location management function network element sends the second request message to the access and mobility management function network element, and correspondingly, the access and mobility management function network element receives the second request message sent by the location management function network element. The access and mobility management function network element sends the second request message to the access network device. Correspondingly, the access network device receives the second request message from the access and mobility management function network element.

In a possible implementation, the second request message may be a measurement request message, that is, the measurement request (measurement request) message recorded in S104. That the second request message carries the second information may be understood as that the second information is added to the measurement request (measurement request) message recorded in S104.

In a possible implementation, the second information includes an identifier of the terminal device or an association identifier.

It may be understood that, because the second request message is used to request the access network device to perform a positioning measurement, the second request message is a message related to the positioning measurement. However, the second information may be carried in the measurement request message. In other words, the second information is also information related to the positioning measurement. Therefore, in this case, the second information includes the identifier of the terminal device or the association identifier, so that after receiving the measurement request message, the access network device can learn that the positioning measurement is the positioning measurement corresponding to the terminal device.

Optionally, the identifier of the terminal device may be identification information indirectly identifying the terminal device, or information directly identifying the identifier of the terminal device. This is not limited in this embodiment of this application. The association identifier may be used to associate the terminal device with the positioning measurement, that is, associate the first request message with the second request message.

In this embodiment of this application, for related descriptions of S701, refer to S501. Details are not described herein again.

Further, after the access network device receives the second request message from the location management function network element, if the positioning signal sent by the terminal device changes, for specific descriptions of performing, by the access network device, the positioning measurement on the changed positioning signal sent by the terminal device, refer to the descriptions in the foregoing embodiment. Details are not described herein again.

In a possible implementation, before the access network device receives the second request message (that is, S701) from the location management function network element, the access network device may further send a positioning information response message to the location management function network element. Correspondingly, the location management function network element receives the positioning information response message from the access network device. The positioning information response message indicates positioning signal configuration information of the terminal device, and the positioning information response message carries the second information.

In other words, the access network device may notify the location management function network element of the second information in advance, so that the location management function network element can subsequently add the second information to the measurement request message. In addition, because the positioning information response message is a message exchanged in an SRS measurement procedure, when the second information is carried in the positioning information response message, it may indicate that the information transmission method described in this embodiment of this application may be further applied to an SRS measurement scenario.

For example, the positioning information response message may be the positioning information response (positioning information response) message recorded in S103.

Optionally, before the access network device sends the positioning information response message to the location management function network element, the location management function network element may further send a positioning information request message (for example, the positioning information request (positioning information request) message recorded in S101) to the access network device. Correspondingly, the access network device receives the positioning information request message from the location management function network element. The positioning information request message is used to request the positioning signal configuration information of the terminal device.

Optionally, after the access network device receives the second request message (that is, S701) from the location management function network element, the access network device may further send a measurement response message (for example, the measurement response (measurement response) message recorded in S105) to the location management function network element. Correspondingly, the location management function network element receives the measurement response message from the access network device. The measurement response message includes the positioning measurement result of the terminal device.

This application provides an information transmission method. An access network device may learn, via the second information carried in the second request message, of the terminal device corresponding to the positioning measurement. Because there is a correspondence between the terminal device and the positioning measurement, the access network device may directly perform the positioning measurement on the positioning signal sent by the terminal device. If the positioning signal of the terminal device changes subsequently, the access network device may further directly continue to perform, based on a correspondence between the terminal device and the positioning measurement, the positioning measurement on the signal sent by the terminal device, thereby avoiding an operation of transmitting a measurement update message between the access network device and the location management function network element, so that the access network device can perform the positioning measurement corresponding to the terminal device in time, and further avoid delaying the access network device to perform the positioning measurement corresponding to the terminal device.

The foregoing mainly describes the solutions provided in embodiments of this application from a perspective of interaction between network elements. Correspondingly, embodiments of this application further provide a communication apparatus, and the communication apparatus is configured to implement the foregoing methods. The communication apparatus may be the access network device in the foregoing method embodiments, or an apparatus including the access network device, or a component that may be used in the access network device. Alternatively, the communication apparatus may be the location management function network element in the foregoing method embodiments, or an apparatus including the location management function network element, or a component that may be used in the location management function network element. It may be understood that, to implement the foregoing functions, the communication apparatus includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be understood that module division in embodiments of this application is an example, and is only logical function division. During actual implementation, there may be another division manner.

For example, the communication apparatus is the location management function network element or the access network device in the foregoing method embodiments. FIG. 8 is a diagram of a structure of a communication apparatus 80. The communication apparatus 80 includes a processing module 801 and a transceiver module 802. The transceiver module 802 may also be referred to as a transceiver unit, and is configured to implement a transceiver function. For example, the transceiver module 802 may be a transceiver circuit, a transceiver machine, a transceiver, or a communication interface.

When the communication apparatus 80 shown in FIG. 8 is the access network device in the foregoing embodiment:

In a possible implementation,
the processing module 801 is configured to indicate the transceiver module 802 to receive a first request message from a location management function network element, where the first request message is used to request positioning signal configuration information of a terminal device, and the first request message carries first information. The first information is used to identify a positioning measurement corresponding to the terminal device, and the positioning measurement corresponding to the terminal device is a positioning measurement performed by the access network device on the positioning signal sent by the terminal device.

In some embodiments, the processing module 801 is further configured to perform, when the positioning signal sent by the terminal device changes, the positioning measurement corresponding to the terminal device on the changed positioning signal sent by the terminal device.

In some embodiments, the first information includes an identifier of the positioning measurement corresponding to the terminal device.

In some embodiments, the positioning signal is an SRS.

In some embodiments, the first request message is a positioning information request message.

In some embodiments, the processing module 801 is further configured to indicate the transceiver module 802 to receive a second request message from the location management function network element, where the second request message is used to request the access network device to perform the positioning measurement corresponding to the terminal device, and the second request message carries the first information.

In some embodiments, the second request message is a measurement request message.

All related content of the steps in the foregoing method embodiments may be cited in function descriptions of the corresponding functional modules. Details are not described herein again.

In this embodiment of this application, the access network device is presented in a form of functional modules obtained through division in an integrated manner. The module herein may be an ASIC, a circuit, a processor that executes one or more software or firmware programs, a memory, an integrated logic circuit, and/or another component capable of providing the foregoing functions. In a simple embodiment, a person skilled in the art may figure out that the access network device may be in a form of the communication apparatus 400 shown in FIG. 4.

For example, the processor 401 in the communication apparatus 400 shown in FIG. 4 may invoke the computer-executable instructions stored in the memory 403, so that the communication apparatus 400 performs the information transmission method in the foregoing method embodiments.

Specifically, functions/implementation processes of the transceiver module 802 and the processing module 801 in FIG. 8 may be implemented by the processor 401 in the communication apparatus 400 shown in FIG. 4 by invoking the computer-executable instructions stored in the memory 403. Alternatively, a function/an implementation process of the processing module 801 in FIG. 8 may be implemented by the processor 401 in the communication apparatus 400 shown in FIG. 4 by invoking the computer-executable instructions stored in the memory 403; and a function/an implementation process of the transceiver module 802 in FIG. 8 may be implemented by using the communication interface 404 in the communication apparatus 400 shown in FIG. 4.

The access network device provided in this embodiment of this application may perform the foregoing information transmission method. Therefore, for a technical effect that can be achieved by the access network device, refer to descriptions in the foregoing method embodiments. Details are not described herein again.

When the communication apparatus 80 shown in FIG. 8 is the location management function network element in the foregoing embodiment:

In a possible implementation,
the processing module 801 is configured to indicate the transceiver module 802 to send a first request message to the access network device, where the first request message is used to request positioning signal configuration information of the terminal device, and the request message carries first information. The first information is used to identify a positioning measurement corresponding to the terminal device, and the positioning measurement corresponding to the terminal device is a positioning measurement performed by the access network device on the positioning signal sent by the terminal device.

In some embodiments, the first information includes an identifier of the positioning measurement corresponding to the terminal device.

In some embodiments, the positioning signal is an SRS.

In some embodiments, the first request message is a positioning information request message.

In some embodiments, the processing module 801 is further configured to indicate the transceiver module 802 to send a second request message to the access network device, where the second request message is used to request the access network device to perform the positioning measurement corresponding to the terminal device, and the second request message carries the first information.

In some embodiments, the second request message is a measurement request message.

All related content of the steps in the foregoing method embodiments may be cited in function descriptions of the corresponding functional modules. Details are not described herein again.

In this embodiment of this application, the location management function network element is presented in a form of the functional modules obtained through division in an integrated manner. The module herein may be an ASIC, a circuit, a processor that executes one or more software or firmware programs, a memory, an integrated logic circuit, and/or another component capable of providing the foregoing functions. In a simple embodiment, a person skilled in the art may figure out that the location management function network element may be in a form of the communication apparatus 400 shown in FIG. 4.

For example, the processor 401 in the communication apparatus 400 shown in FIG. 4 may invoke the computer-executable instructions stored in the memory 403, so that the communication apparatus 400 performs the information transmission method in the foregoing method embodiments.

Specifically, functions/implementation processes of the transceiver module 802 and the processing module 801 in FIG. 8 may be implemented by the processor 401 in the communication apparatus 400 shown in FIG. 4 by invoking the computer-executable instructions stored in the memory 403. Alternatively, a function/an implementation process of the processing module 801 in FIG. 8 may be implemented by the processor 401 in the communication apparatus 400 shown in FIG. 4 by invoking the computer-executable instructions stored in the memory 403; and a function/an implementation process of the transceiver module 802 in FIG. 8 may be implemented by using the communication interface 404 in the communication apparatus 400 shown in FIG. 4.

The location management function network element provided in this embodiment may perform the foregoing information transmission method. Therefore, for a technical effect that can be achieved by the location management function network element, refer to the foregoing method embodiments. Details are not described herein.

When the communication apparatus 80 shown in FIG. 8 is the access network device in the foregoing embodiment:

In a possible implementation:
The processing module 801 is configured to indicate the transceiver module 802 to receive a second request message from the location management function network element, where the second request message is used to request the access network device to perform a positioning measurement, and the measurement request message carries second information. The second information indicates a terminal device corresponding to the positioning measurement, and the positioning measurement is a positioning measurement performed by the access network device on a positioning signal sent by the terminal device.

In some embodiments, the processing module 801 is further configured to perform, when the positioning signal sent by the terminal device changes, the positioning measurement on the changed positioning signal sent by the terminal device.

In some embodiments, the second information includes an identifier of the terminal device or an association identifier.

In some embodiments, the positioning signal is an SRS.

In some embodiments, the second request message is a measurement request message.

In some embodiments, the processing module 801 is further configured to indicate the transceiver module 802 to send a positioning information response message to the location management function network element, where the positioning information response message indicates the positioning signal configuration information of the terminal device, and the positioning information response message carries the second information.

All related content of the steps in the foregoing method embodiments may be cited in function descriptions of the corresponding functional modules. Details are not described herein again.

In this embodiment of this application, the access network device is presented in a form of functional modules obtained through division in an integrated manner. The module herein may be an ASIC, a circuit, a processor that executes one or more software or firmware programs, a memory, an integrated logic circuit, and/or another component capable of providing the foregoing functions. In a simple embodiment, a person skilled in the art may figure out that the access network device may be in a form of the communication apparatus 400 shown in FIG. 4.

For example, the processor 401 in the communication apparatus 400 shown in FIG. 4 may invoke the computer-executable instructions stored in the memory 403, so that the communication apparatus 400 performs the information transmission method in the foregoing method embodiments.

Specifically, functions/implementation processes of the transceiver module 802 and the processing module 801 in FIG. 8 may be implemented by the processor 401 in the communication apparatus 400 shown in FIG. 4 by invoking the computer-executable instructions stored in the memory 403. Alternatively, a function/an implementation process of the processing module 801 in FIG. 8 may be implemented by the processor 401 in the communication apparatus 400 shown in FIG. 4 by invoking the computer-executable instructions stored in the memory 403; and a function/an implementation process of the transceiver module 802 in FIG. 8 may be implemented by using the communication interface 404 in the communication apparatus 400 shown in FIG. 4.

The access network device provided in this embodiment of this application may perform the foregoing information transmission method. Therefore, for a technical effect that can be achieved by the access network device, refer to descriptions in the foregoing method embodiments. Details are not described herein again.

When the communication apparatus 80 shown in FIG. 8 is the location management function network element in the foregoing embodiment:

In a possible implementation,
the processing module 801 is configured to indicate the transceiver module 802 to send a second request message to the access network device, where the second request message is used to request the access network device to perform a positioning measurement, and the measurement request message carries second information. The second information indicates a terminal device corresponding to the positioning measurement, and the positioning measurement is a measurement performed based on a positioning signal sent by the terminal device.

In some embodiments, the second information includes an identifier of the terminal device or an association identifier.

In some embodiments, the positioning signal is an SRS.

In some embodiments, the second request message is a measurement request message.

In some embodiments, the processing module 801 is further configured to indicate the transceiver module 802 to receive a positioning information response message from the access network device, where the positioning information response message indicates the positioning signal configuration information of the terminal device, and the positioning information response message carries the second information.

All related content of the steps in the foregoing method embodiments may be cited in function descriptions of the corresponding functional modules. Details are not described herein again.

In this embodiment of this application, the location management function network element is presented in a form of the functional modules obtained through division in an integrated manner. The module herein may be an ASIC, a circuit, a processor that executes one or more software or firmware programs, a memory, an integrated logic circuit, and/or another component capable of providing the foregoing functions. In a simple embodiment, a person skilled in the art may figure out that the location management function network element may be in a form of the communication apparatus 400 shown in FIG. 4.

For example, the processor 401 in the communication apparatus 400 shown in FIG. 4 may invoke the computer-executable instructions stored in the memory 403, so that the communication apparatus 400 performs the information transmission method in the foregoing method embodiments.

Specifically, functions/implementation processes of the transceiver module 802 and the processing module 801 in FIG. 8 may be implemented by the processor 401 in the communication apparatus 400 shown in FIG. 4 by invoking the computer-executable instructions stored in the memory 403. Alternatively, a function/an implementation process of the processing module 801 in FIG. 8 may be implemented by the processor 401 in the communication apparatus 400 shown in FIG. 4 by invoking the computer-executable instructions stored in the memory 403; and a function/an implementation process of the transceiver module 802 in FIG. 8 may be implemented by using the communication interface 404 in the communication apparatus 400 shown in FIG. 4.

The location management function network element provided in this embodiment may perform the foregoing information transmission method. Therefore, for a technical effect that can be achieved by the location management function network element, refer to the foregoing method embodiments. Details are not described herein.

It should be understood that one or more of the modules or units may be implemented by software, hardware, or a combination thereof. When any one of the foregoing modules or units is implemented by using software, the software exists in a form of computer program instructions, and is stored in a memory. A processor may be configured to execute the program instructions and implement the foregoing method procedures. The processor may be built into a SoC (System-on-a-Chip) or an ASIC, or may be an independent semiconductor chip. In addition to the core configured to perform operations or processing by executing the software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

In a possible implementation, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include a memory. When the communication apparatus is a chip system, the communication device may include a chip, or may include a chip and another discrete component. This is not specifically limited in this embodiment of this application.

In a possible implementation, an embodiment of this application further provides a computer-readable storage medium. The computer-readable storage medium stores a computer program or instructions. When the computer program or instructions are run on a communication apparatus, the communication apparatus is enabled to perform the method in any one of the foregoing method embodiments or any one of the implementations of the foregoing method embodiments.

In a possible implementation, an embodiment of this application further provides an information transmission method. The information transmission method includes the method in any one of the foregoing method embodiments or any one of the implementations of the foregoing method embodiments.

In a possible implementation, an embodiment of this application further provides a communication system. The communication system includes the location management function network element in the foregoing method embodiments and the access network device in the foregoing method embodiments.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprise" (comprising) does not exclude another component or another step, and "a" or "one" does not exclude a plurality of cases. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. An information transmission method, applied to an access network device, comprising:
receiving a first request message from a location management function network element, wherein the first request message is used to request positioning signal configuration information of a terminal device, the first request message carries first information, the first information is used to identify a positioning measurement corresponding to the terminal device, and the positioning measurement corresponding to the terminal device is a positioning measurement performed by the access network device on the positioning signal sent by the terminal device.

2. The method according to claim 1, wherein the method further comprises:
performing, when the positioning signal sent by the terminal device changes, the positioning measurement corresponding to the terminal device on the changed positioning signal sent by the terminal device.

3. The method according to claim 1 or 2, wherein the first information comprises an identifier of the positioning measurement corresponding to the terminal device.

4. The method according to any one of claims 1 to 3, wherein the positioning signal is a sounding reference signal SRS.

5. The method according to any one of claims 1 to 4, wherein the first request message is a positioning information request message.

6. The method according to any one of claims 1 to 5, wherein the method further comprises:
receiving a second request message from the location management function network element, wherein the second request message is used to request the access network device to perform the positioning measurement corresponding to the terminal device, and the second request message carries the first information.

7. The method according to claim 6, wherein the second request message is a measurement request message.

8. An information transmission method, applied to a location management function network element, and comprising:
sending a first request message to an access network device, wherein the first request message is used to request positioning signal configuration information of a terminal device, the request message carries first information, the first information is used to identify a positioning measurement corresponding to the terminal device, and the positioning measurement corresponding to the terminal device is a positioning measurement performed by the access network device on a positioning signal sent by the terminal device.

9. The method according to claim 8, wherein the first information comprises an identifier of the positioning measurement corresponding to the terminal device.

10. The method according to claim 8 or 9, wherein the positioning signal is a sounding reference signal SRS.

11. The method according to any one of claims 8 to 10, wherein the first request message is a positioning information request message.

12. The method according to any one of claims 8 to 11, wherein the method further comprises:
sending a second request message to the access network device, wherein the second request message is used to request the access network device to perform the positioning measurement corresponding to the terminal device, and the second request message carries the first information.

13. The method according to claim 12, wherein the second request message is a measurement request message.

14. An information transmission method, applied to an access network device, comprising:
receiving a second request message from a location management function network element, wherein the second request message is used to request an access network device to perform a positioning measurement, the measurement request message carries second information, the second information indicates a terminal device corresponding to the positioning measurement, and the positioning measurement is a positioning measurement performed by the access network device on a positioning signal sent by the terminal device.

15. The method according to claim 14, wherein the method further comprises:
performing, when the positioning signal sent by the terminal device changes, the positioning measurement on the changed positioning signal sent by the terminal device.

16. The method according to claim 14 or 15, wherein the second information comprises an identifier of the terminal device or an association identifier.

17. The method according to any one of claims 14 to 16, wherein the positioning signal is a sounding reference signal SRS.

18. The method according to any one of claims 14 to 17, wherein the second request message is a measurement request message.

19. The method according to any one of claims 14 to 18, wherein before receiving the second request message from the location management function network element, the method further comprises:
sending a positioning information response message to the location management function network element, wherein the positioning information response message indicates positioning signal configuration information of the terminal device, and the positioning information response message carries the second information.

20. An information transmission method, applied to a location management function network element, and comprising:
sending a second request message to an access network device, wherein the second request message is used to request the access network device to perform a positioning measurement, the measurement request message carries second information, the second information indicates a terminal device corresponding to the positioning measurement, and the positioning measurement is measurement performed based on a positioning signal sent by the terminal device.

21. The method according to claim 20, wherein the second information comprises an identifier of the terminal device or an association identifier.

22. The method according to claim 20 or 21, wherein the positioning signal is a sounding reference signal SRS.

23. The method according to any one of claims 20 to 22, wherein the second request message is a measurement request message.

24. The method according to any one of claims 20 to 23, wherein before sending the second request message to the access network device, the method further comprises:
receiving a positioning information response message from the access network device, wherein the positioning information response message indicates positioning signal configuration information of the terminal device, and the positioning information response message carries the second information.

25. A communication apparatus, comprising a functional unit configured to perform the method according to any one of claims 1 to 7, or a functional unit configured to perform the method according to any one of claims 8 to 13, or a functional unit configured to perform the method according to any one of claims 14 to 19, or a functional unit configured to perform the method according to any one of claims 20 to 24, wherein an action performed by the functional unit is implemented by hardware or implemented by hardware by executing corresponding software.

26. A communication apparatus, wherein the communication apparatus comprises a processor, the processor is configured to run a computer program or instructions, or is configured to enable, through a logic circuit, the communication apparatus to perform the method according to any one of claims 1 to 7, or enable the communication apparatus to perform the method according to any one of claims 8 to 13, or enable the communication apparatus to perform the method according to any one of claims 14 to 19, or enable the communication apparatus to perform the method according to any one of claims 20 to 24.

27. A computer-readable storage medium, wherein the computer-readable storage medium stores computer instructions or a program, and when the computer instructions or the program is run on a computer, a communication apparatus is enabled to perform the method according to any one of claims 1 to 7, a communication apparatus is enabled to perform the method according to any one of claims 8 to 13, a communication apparatus is enabled to perform the method according to any one of claims 14 to 19, or a communication apparatus is enabled to perform the method according to any one of claims 20 to 24.

28. A communication system, comprising a communication apparatus configured to perform the method according to any one of claims 1 to 7 or claims 14 to 19, and a communication apparatus configured to perform the method according to any one of claims 8 to 13 or claims 20 to 24.

29. A computer program product, wherein the computer program product comprises a computer program or instructions, and when the computer program or the instructions are run on a computer, the computer is enabled to perform the method according to any one of claims 1 to 24.
